# EUROPEAN PATENT SPECIFICATION

(11) **EP 1 758 491 B1**
(45) Date of publication and mention of the grant of the patent: **23.07.2008**
(21) Application number: 05747359.7
(22) Date of filing: 10.06.2005
(51) Int. Cl.: A47J 31/46

(54) **A COFFEE MACHINE**
KAFFEEMASCHINE
MACHINE A CAFE

(30) Priority: 15.06.2004 TR 200401406
(43) Date of publication of application: 07.03.2007
(73) Proprietor: Arçelik Anonim Sirketi, 34950 Istanbul (TR)
(72) Inventor: CAGLIN, Umit, Arcelik Anonim Sirketi, 34950 Istanbul (TR); GUNDUZ, Nihat, Arcelik Anonim Sirketi, 34950 Istanbul (TR); HASANREISOGLU, Levent, Arcelik Anonim Sirketi, 34950 Istanbul (TR); SIMSIR, Bogac, Arcelik Anonim Sirketi, 34950 Istanbul (TR); KAYA, Mehmet, Arcelik Anonim Sirketi, 34950 Istanbul (TR)
(86) International application number: PCT/IB2005/051920
(87) International publication number: WO 2005/122852

(56) References cited:
- EP-A- 0 690 234

## Description

This invention relates to a coffee machine, preferably suitable for preparing Turkish coffee.

In a coffee machine, during the preparation of Turkish coffee, cold water is transferred from a water reservoir into vessels where coffee is cooked by means of pumps and then, coffee cooking process is started. The air that enters the water transfer system during the filling of the water reservoir or the detaching and attaching of it for cleaning purposes etc, causes the pumps to also pump air together with the water thereby preventing coffee from being prepared in desired amounts.

In the United States Patent Document US 5299595, a description is given of an application wherein, in an automatic coffee machine, air mixed into the water and steam generated inside the system are discharged by being routed to a draining bore by means of a spherical rubber component located inside the two-way valve at the outlet of a pump which pumps the water from the water reservoir to the heater or to the brewing vessel.

In the United States Patent Document US 4386556, a description is given of a check valve, located in a heating container with a diaphram pump where coffee prepared and filtered in an automatic coffee machine is transferred into in order to be kept warm or to be brewed, the check valve of which enables the transfer of coffee from a reservoir into the heating container by means of pressurized air generated by the pump whereas it prevents air from escaping outside and which prevents the coffee inside from flowing outside as the heating container is taken out of the coffee machine in order to serve coffee in the cups.

In the European Patent Document EP 0690234, a description is given of an application wherein, as well as its pump and heater connections, the valve inside an automatic coffee machine also incorporates an air discharge channel used to discharge the air that is sucked when the pump starts to operate.

The aim of the present invention is the realization of a coffee machine wherein means are provided to deliver defined amount of water, during the preparation of such hot beverages as coffee, to the cooking vessels so that mixing of air is prevented.

The coffee machine realized in order to attain above mentioned aim of the present invention is illustrated in the attached figures where:

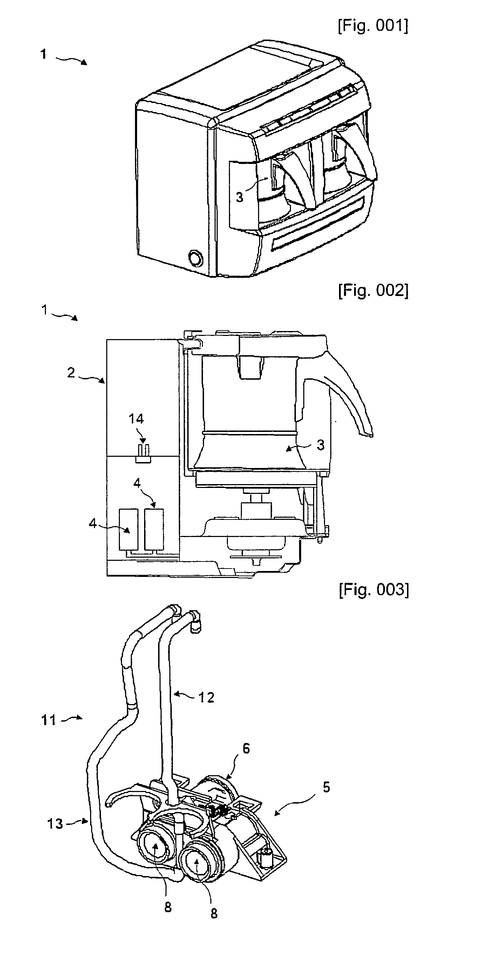

Fig.1- is a perspective view of a coffee machine.

Fig.2 - is a side schematic representation of a coffee machine.

Fig.3 - is a perspective view of a pump air discharge system in a coffee machine.

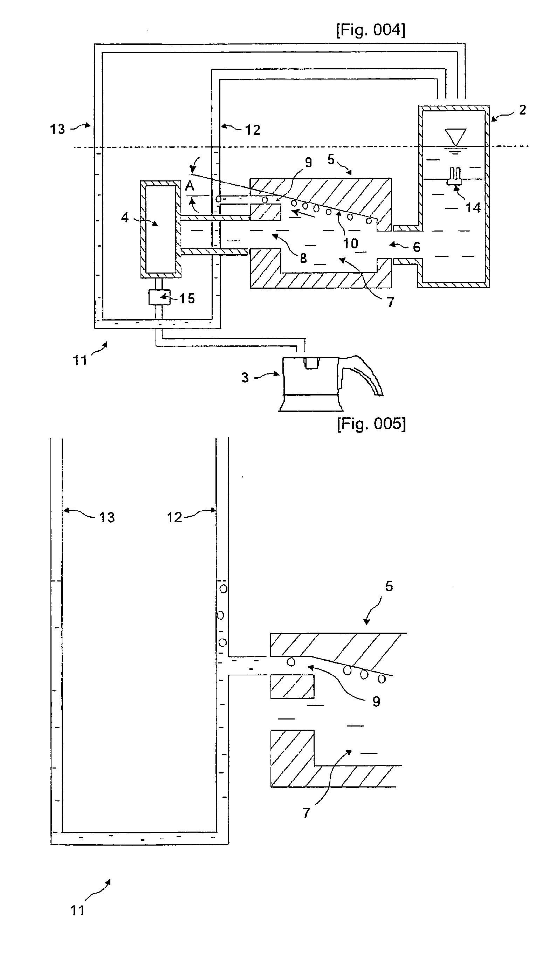

Fig.4 - is a schematic representation of a pump air discharge system in a coffee machine.

Fig.5 - is a schematic representation of an air discharge channel in a pump air discharge system.

The elements shown in the figures are numbered individually as follows:
1. Coffee machine
2. Water reservoir
3. Cooking chamber
4. Pump
5. Valve
6. Water inlet hole
7. Suction volume
8. Pump inlet
9. Air discharge channel
10. Ceiling
11. Discharge conduit
12. Main discharge conduit
13. Auxiliary discharge conduit
14. Water level sensor
15. Flowmeter

The coffee machine (1) comprises a water reservoir (2), a cooking chamber (3) where cooking process is performed, one or more than one pump (4) delivering the water inside the water reservoir (2) to the cooking chamber (3), a valve (5) which routes the water coming from the water reservoir (2) to the pumps (4) and, a water level sensor (14) which detects the water level inside the water reservoir (2) and, stops the pumps (4) and warns the user if said water level decreases.

The valve (5) incorporates a water inlet hole (6) connected to the water reservoir (2) whereby water is taken in, a suction volume (7) where water is collected to be sucked by the pumps (4), one or more than one pump inlet (8) connected to the pumps (4), an air discharge channel (9) which is positioned below the minimum water level inside the water reservoir (2) and is used to discharge the air bubbles that accumulate in the suction volume (7) while detaching / attaching the water reservoir (2) and, a ceiling (10) which is inclined with respect to the horizontal plane and is positioned above the suction volume (7), whereby air bubbles that mix to the water in the suction volume (7) and that rise automatically because of the density difference, are collected and whereby mentioned air bubbles are routed to the air discharge channel (9) by continuing their motion.

While determining the inclination angle (A) of the ceiling (10), it is considered that the surface where the coffee machine (1) stands on might also be inclined.

The valve (5) is positioned so that the air discharge channel (9) is located below the minimum water level inside the water reservoir (2).The water level sensor (14) ensures that water level inside the water reservoir (2) is above the suction volume (7) and air discharge channel (9) and thereby, that there is always water inside the suction volume (7) and the air discharge channel (9). Air bubbles that mix to the water particularly while attaching and detaching the water reservoir (2) or for some other reasons, stick to the ceiling (10) by rising inside the water in the suction volume (7) and, as a result of the inclined form of the ceiling (10), they are discharged from the air discharge channel (9) by continuing their motion towards the air discharge channel (9).

In the embodiment in accordance with the present invention, the coffee machine (1) comprises a U-shape discharge conduit (11) which is connected to the air discharge channel (9) and is used to discharge air bubbles coming out of the air discharge channel (9) to the atmosphere, wherein the bottom of the mentioned U-shape is below the minimum water level inside water reservoir (2) whereas its ends face upwards, and are above the maximum water level inside water reservoir (2), opening to the atmosphere.

The discharge conduit (11) stores a necessary amount of water so as to prevent the water level from falling to the level of air discharge channel (9) at the instant where pumps (4) start to operate and that air is sucked through the air discharge channel (9), thereby it is achieved to remove the transient instability created by pumps (4) at their starting moment.

The discharge conduit (11) incorporating a main discharge conduit (12) which is connected to the air discharge channel (9), constitutes one of the legs of the aforementioned U-shape and where air bubbles coming from the air discharge channel (9) are routed to and, an auxiliary discharge conduit (13) constituting the other leg of the U-shape, whereby it is prevented that water level inside the main discharge conduit (12) falls below the level of the air discharge channel (9) because of the suction created in the suction volume (7) during the operation of pumps (4) and that air is sucked.

Since the bottom of the U-shape discharge conduit (11) is below the minimum water level and the ends of the main and auxiliary discharge conduits (12, 13) constituting the legs of said U-form face upwards opening to the atmosphere, the water level inside the discharge conduit (11) is always the same as that inside the water reservoir (2) in accordance with the principle of connected vessels. Air bubbles that pass through the air discharge channel (9) are routed to the main discharge conduit (12) and, are discharged to the atmosphere by passing through the water in the main discharge conduit (12).

When the pumps (4) start to operate in order to pump water into the cooking chambers (3), because of the suction created especially at the first start moment of the pumps (4), there is some fluctuation in the water level inside the discharge conduit (11) until it is balanced with the water level in the water reservoir (2). By means of the water inside the discharge conduit (11), present all the time, it is prevented that the air is sucked from the atmosphere as the water level in the main discharge conduit (12) falls below the level of the air discharge channel (9). As a result of the U-shape of the discharge conduit (11) and the water continuously stored in it, it is accomplished that the water level inside the main discharge conduit (12) is kept in balance at the first start of the pumps (4).

In the preferred embodiment, the ends of the main and auxiliary discharge conduits (12, 13) which open to the atmosphere are directed to the water reservoir (2). Thereby, it is achieved that some amount of water that may also be discharged together with the air bubbles is prevented from leaking to the interior or surroundings of the coffee machine (1) and that it is collected in the water reservoir (2).

In another embodiment of the present invention, the coffee machine (1) comprises one or more than one flow meter (15) positioned at the outlets of the pumps (4).

In the coffee machine (1), the object of the present invention, preferably while preparing Turkish coffee, in order to cook predetermined amount of coffee inside the cooking chamber (3), depending on the size and number of the cups where coffee is to be served, the pumps (4) are used to pump water from the water reservoir (2) to the cooking chamber (3) for varying periods of time in accordance with the mentioned predetermined amounts, wherein it is achieved that exact desired amount of water is delivered to the cooking chambers (3) since it is prevented that air is mixed to the water pumped by the pumps (4).

## Claims

1. A coffee machine (1) comprising; a water reservoir (2); a cooking chamber (3) where cooking process is performed; one or more than one pump (4) delivering the water inside the water reservoir (2) to the cooking chamber (3); and **characterized by** a valve (5) which routes the water coming from the water reservoir (2) to the pumps (4) and comprises a pump inlet (8) connected to the pumps (4), a suction volume (7) where water is collected to be sucked by the pumps (4), an air discharge channel (9) which is used to discharge the air bubbles that accumulate in the suction volume (7) and, a ceiling (10) which is inclined with respect to the horizontal plane and is positioned above the suction volume (7), whereby air bubbles that mix to the water in the suction volume (7) and that rise automatically because of the density difference, are collected and whereby mentioned air bubbles are routed to the air discharge channel (9) by continuing their motion.

2. A coffee machine (1) as described in Claim 1, **characterized by** a valve (5) comprising an air discharge channel (9) which is positioned below the minimum water level inside the water reservoir (2).

3. A coffee machine (1) as described in Claims 1 or 2, **characterized by** a discharge conduit (11) which is connected to the air discharge channel (9) and stores a necessary amount of water so as to prevent the water level from falling to the level of air discharge channel (9) at the instant where pumps (4) start to operate and that air is sucked through the air discharge channel (9) and, whereby air bubbles coming out of the air discharge channel (9) are discharged to the atmosphere.

4. A coffee machine (1) as described in Claim 3, **characterized by** an U-shape discharge conduit (11) wherein the bottom of the mentioned U-shape is below the minimum water level inside water reservoir (2) whereas its ends face upwards, and are above the maximum water level inside water reservoir (2), opening to the atmosphere.

5. A coffee machine (1) as described in Claim 4, **characterized by** a discharge conduit (13) which comprises a main discharge conduit (12) that is connected to the air discharge channel (9), constituting one of the legs of the U-shape and where air bubbles coming from the air discharge channel (9) are routed to and, an auxiliary discharge conduit (13) constituting the other leg of the U-shape, whereby it is prevented that water level inside the main discharge conduit (12) falls below the level of the air discharge channel (9) because of the suction created in the suction volume (7) during the operation of pumps (4) and that air is sucked.

6. A coffee machine (1) as described in Claim 4, **characterized by** a discharge conduit (11) wherein its ends which open to the atmosphere are directed to the water reservoir (2).

7. A coffee machine (1) as described in any of the above Claims, **characterized by** a water level sensor (14) which detects the water level inside the water reservoir (2) and, stops the pumps (4) and warns the user if said water level decreases.

8. A coffee machine (1) as described in any of the above Claims, **characterized by** one or more than one flow meter (15) positioned to the outlets of the pumps (4).

## Patentansprüche

1. Kaffeemaschine (1), umfassend: einen Wasserbehälter (2); eine Kochkammer (3), in der der Kochvorgang stattfindet; eine oder mehrere Pumpen (4), die Wasser aus dem Wasserbehälter (2) an die Kochkammer (3) liefern; und **gekennzeichnet durch** ein Ventil (5), das das Wasser, das von dem Wasserbehälter (2) kommt, zu den Pumpen (4) leitet, und einen Pumpeneinlass (8) umfasst, der mit den Pumpen (4) verbunden ist, einen Ansaugraum (7), in dem Wasser gesammelt wird, das von den Pumpen (4) angesaugt werden soll, einen Entlüftungskanal (9), der dazu dient, Luftblasen abzulassen, die sich im Ansaugraum (7) ansammeln, und eine Decke (10), die in Bezug auf die horizontale Ebene geneigt ist, und über dem Ansaugraum (7) angeordnet ist, wodurch Luftblasen, die im Ansaugraum (7) mit dem Wasser vermischt sind, und die aufgrund der Dichtedifferenz automatisch aufsteigen, gesammelt werden, und wodurch die Luftblasen in Weiterbewegung zu dem Entlüftungskanal (9) geleitet werden.

2. Kaffeemaschine (1) nach Anspruch 1, **dadurch gekennzeichnet, dass** das Ventil (5) einen Entlüftungskanal (9) umfasst, der unterhalb des minimalen Wasserpegels im Wasserbehälter (2) angeordnet ist.

3. Kaffeemaschine (1) nach Anspruch 1 oder 2, **gekennzeichnet durch** eine Ablassleitung (11), die mit dem Entlüftungskanal (9) verbunden ist, und die eine erforderliche Menge an Wasser speichert, um zu verhindern, dass der Wasserpegel in dem Moment, in dem die Pumpen (4) zu arbeiten beginnen und Luft **durch** den Entlüftungskanal (9) gesaugt wird, bis auf die Höhe des Entlüftungskanals (9) abfällt, und **durch** die die Luftblasen, die aus dem Entlüftungskanal (9) austreten, nach außen abgelassen werden.

4. Kaffeemaschine (1) nach Anspruch 3, **dadurch gekennzeichnet, dass** die Ablassleitung (11) eine U-Form aufweist, wobei der Boden der U-Form unterhalb des minimalen Wasserpegels im Wasserbehälter (2) angeordnet ist, während ihre Enden nach oben gewandt sind, und oberhalb des maximalen Wasserpegels im Wasserbehälter (2) angeordnet sind, und nach außen hin geöffnet sind.

5. Kaffeemaschine (1) nach Anspruch 4, **gekennzeichnet durch** eine Ablassleitung (13), die eine Hauptablassleitung (12) umfasst, welche mit dem Entlüftungskanal (9) verbunden ist, und einen der Zweige der U-Form bildet, und wohin Luftblasen vom Entlüftungskanal (9) geleitet werden, und eine Hilfsablassleitung (13), die den anderen Zweig der U-Form bildet, wodurch verhindert wird, dass der Wasserpegel in der Hauptablassleitung (12) aufgrund der Saugwirkung, die während des Betriebs der Pumpen (4) im Ansaugraum (7) erzeugt wird, unter die Höhe des Entlüftungskanals (9) abfällt, und dass Luft angesaugt wird.

6. Kaffeemaschine (1) nach Anspruch 4, **dadurch gekennzeichnet, dass** die Enden der Ablassleitung (11), die nach außen hin geöffnet sind, auf den Wasserbehälter (2) gerichtet sind.

7. Kaffeemaschine (1) nach einem der vorangehenden Ansprüche, **gekennzeichnet durch** einen Wasserpegelmessfühler (14), der den Wasserpegel im Wasserbehälter (2) detektiert, die Pumpen (4) anhält und den Benutzer warnt, wenn der Wasserpegel absinkt.

8. Kaffeemaschine (1) nach einem der vorangehenden Ansprüche, **gekennzeichnet durch** einen oder mehrere Durchflussmesser (15), die an den Auslässen der Pumpen (4) angeordnet sind.

## Revendications

1. Une cafetière (1) comprenant un réservoir à eau (2), une chambre de cuisson (3) dans laquelle le processus de cuisson se réalise, une ou plusieurs pompe (4) livrant l'eau qui se trouve dans le réservoir (2) à la chambre de cuisson (3), **caractérisée par** une soupape (5) qui oriente l'eau venant du réservoir à eau (2) aux pompes (4) et qui comprend une anse de pompe (8) connectée aux pompes (4), un volume d'aspiration (7) dans lequel l'eau est collectée pour être aspirée par les pompes (4), un canal d'évacuation d'air (9) qui est utilisé pour évacuer les bulles d'air accumulées dans le volume d'aspiration (7) et un plafond (10) incliné en fonction du plan horizontal et positionné au-dessus du volume d'aspiration (7), par lequel les bulles d'air mélangées à l'eau dans le volume d'aspiration (7) et élevées automatiquement en raison de la différence de densité sont collectées et par lequel les bulles d'air collectées sont orientées vers le canal d'évacuation (9) pendant qu'elles continuent leurs mouvements.

2. Une cafetière (1) selon la revendication 1, **caractérisée par** une soupape (5) comprenant un canal d'évacuation d'air (9) positionné sous le niveau d'eau minimum dans le réservoir à eau (2).

3. Une cafetière (1) selon la revendication 1 ou 2, **caractérisée par** un conduit (11) connecté au canal d'évacuation d'air (9) et qui stocke la quantité d'eau nécessaire pour éviter la baisse du niveau d'eau jusqu'au niveau du canal d'évacuation d'air (9) au moment où les pompes (4) se mettent en marche et que ledit air est aspiré par le canal d'évacuation d'air (9) et, par lequel les bulles d'air venant de l'extérieur du canal d'évacuation d'air (9) sont évacuées à l'atmosphère.

4. Une cafetière (1) selon la revendication 3, **caractérisée par** un conduit en forme d'U (11) dans lequel le pied de ladite forme U est en dessous du niveau d'eau minimum dans le réservoir à eau (2) tandis que ses bouts montants sont au-dessus du niveau d'eau maximum dans le réservoir à eau (2) pour s'ouvrir à la fin à l'atmosphère.

5. Une cafetière (1) selon la revendication 4, **caractérisée par** un conduit d'évacuation (13) comprenant un conduit d'évacuation principal (12) connecté au canal d'évacuation d'air (9), qui constitue l'un des pieds de la forme d'U et par lequel les bulles d'air venant du canal d'évacuation d'air (9) sont orientées, et un conduit d'évacuation auxiliaire (13) qui constitue l'autre pied de la forme U, par lequel le niveau d'eau dans le conduit d'évacuation principal (12) est empêché de baisser sous le niveau du canal d'évacuation d'air (9) par l'effet d'aspiration créé dans le volume d'aspiration (7) durant l'opération des pompes (4) et ledit air est aspiré.

6. Une cafetière (1) selon la revendication 4, **caractérisée par** un conduit d'évacuation (11) dont les bouts, s'ouvrant à l'atmosphère, sont dirigés vers le réservoir à eau (2).

7. Une cafetière (1) selon l'une des revendications précédentes, **caractérisée par** un capteur du niveau d'eau (14) qui détecte le niveau d'eau dans le réservoir à eau (2) et qui arrête les pompes (4) et avertit l'utilisateur en cas de décroissance du niveau.

8. Une cafetière (1) selon l'une des revendications précédentes, **caractérisée par** un ou plusieurs compteur d'écoulement (15) positionné à la sortie des pompes (4).
